# EUROPÄISCHE PATENTSCHRIFT

(11) **EP 0 536 659 B1**
(45) Veröffentlichungstag und Bekanntmachung des Hinweises auf die Patenterteilung: **10.01.1996**
(21) Anmeldenummer: 92116927.2
(22) Anmeldetag: 02.10.1992
(51) Int. Cl.: H04N 7/00

(54) **Einrichtung und Verfahren zur Gewinnung der binären Dateninformation eines in einem Video-Basisbandsignal enthaltenen Datensignales**
Device and method of extraction of the digital data information signal contained in a baseband video signal
Méthode et dispositif pour l'extraction de l'information binaire d'un signal de données contenu dans un signal vidéo en bande de base

(30) Priorität: 11.10.1991 DE 4133766
(43) Veröffentlichungstag der Anmeldung: 14.04.1993
(73) Patentinhaber: SIEMENS AKTIENGESELLSCHAFT, D-80333 München (DE)
(72) Erfinder: Guggenmos, Wolfgang, Dipl.-Ing., W-8950 Kaufbeuren (DE)

(56) Entgegenhaltungen:
- US-A- 4 115 811
- IEEE TRANSACTIONS ON BROADCASTING Bd. 34, Nr. 3, 30. September 1988, NEW YORK US Seiten 381 - 397 SABLATASH ET AL. 'comparaisons and improvements of designs of data slicers and clock synchronization circuits for broadcast teletext decoders operating in a multipath environment.'

## Beschreibung

Verfahren zur Gewinnung der binären Dateninformation eines in einem Video-Basisbandsignal enthaltenen Datensignales und Anordnung zur Durchführung des Verfahrens sowie die Verwendung einer solchen Anordnung.

Die Erfindung betrifft ein Verfahren zur Gewinnung der in einem Video-Basisband-Signal enthaltenen Dateninformation, bei dem das Videosignal mittels eines Filters mit Tiefpaßverhalten gefiltert wird, und eine Anordnung zur Durchführung des Verfahrens sowie die Verwendung einer solchen Anordnung.

Solche Verfahren sind bekannt, beispielsweise aus der US-A-4,115,811. Dort wird das im analogen Videosignal enthaltene Clock-Signal 14 mit einem analogen Tiefpaßfilter 45 gefiltert (siehe dort die Figuren 6 und 7 sowie Spalte 3, Zeilen 49-58). Am Ende wird der gefilterte Wert des Clock-Signals als Referenzwert für einen analogen Komparator 40 gespeichert. Im Komparator werden dann der Referenzwert und das Videosignal miteinander verglichen (siehe dort Spalte 3, Zeilen 59-63 und die Figuren 6 und 7), um ein Datensignal zu erzeugen.

Üblicherweise wird das die zu gewinnenden Daten enthaltende Videosignal bei bekannten Verfahren mit einem Schwellwert verglichen, der üblicherweise nahezu dem Mittelwert des Eingangssignals entspricht. Dieser Mittelwert wird dann durch Mittelung des einer logischen Eins entsprechenden Pegels und des einer logischen Null entsprechenden Pegels des empfangenen Signales gebildet. Realisiert werden solche Verfahren durch Komparatorschaltungen oder Schwellwertschalter. Solche bekannten Verfahren liefern bei Eingangssignalen, denen Rauschen oder andere Störungen überlagert sind, oft Fehlinformationen. Die Häufigkeit der Fehlinformationen kann zwar durch Extraktion des Gleichanteiles des Videosignales vor Vergleich mit dem Schwellwert verringert werden, jedoch liefert auch dieser zusätzliche Verfahrensschritt alleine keine befriedigenden Ergebnisse bei der Auswertung von gestörten Empfangssignalen. Als Vorrichtung zur Extraktion des Gleichanteiles kann irgendeine Vorrichtung mit Hochpaßverhalten vorgesehen sein. Ein günstiges Verfahren zur Extraktion des Gleichanteiles des eingespeisten Videosignales wird dadurch erzielt, daß evtl. durch eine Tiefpaßfilterung der Mittelwert des FBAS-Signales ermittelt wird und durch Subtraktion von diesem FBAS-Signal abgezogen wird.

Aufgabe der vorliegenden Erfindung ist es, ein Verfahren bereitzustellen, das auch aus einem Videosignal, dem Rauschen oder andere Störungen überlagert sind, die binäre Dateninformation sicher auswertet.

Diese Aufgabe wird durch ein Verfahren nach dem Patentanspruch 1 gelöst. Günstige Ausgestaltungsformen dieses Verfahrens sind Gegenstand der abhängigen Ansprüche 2 bis 3.

Eine weitere Aufgabe der Erfindung ist das Bereitstellen einer Schaltungsanordnung zur Durchführung eines solchen Verfahrens. Diese Aufgabe wird durch eine Schaltungsanordnung nach Anspruch 4 gelöst.

Die Verwendung einer Schaltungsanordnung nach den Ansprüchen 4 bis 9 ist in Anspruch 10 dargelegt.

Die vorliegende Erfindung macht sich die Erkenntnis zunutze, daß von allen möglichen Signalfolgen von drei aufeinanderfolgenden Binärdaten, deren mittlerer Datenwert eine Eins ist, sich die Signalfolge 111 am stärksten von allen Signalfolgen unterscheidet, die als mittleren Datenwert eine Null haben, also 000, 101, 001 und 100. Außerdem unterscheidet sich die Datenfolge 010 am wenigsten von den Signalfolgen, deren mittlerer Datenwert eine Null ist. Die Signalfolgen, deren mittlerer Datenwert eine Eins ist, unterscheiden sich von den komplementären Signalfolgen, deren mittlerer Datenwert eine Null ist nur im Vorzeichen. Daher kann mit nur zwei Filtern, die auf die Signalfolge 111 und 010 abgestimmt sind, und mit einer das Vorzeichen berücksichtigenden Auswerteschaltung das empfangene Signal sicher bewertet werden.

Im folgenden wird die Erfindung anhand der Figuren näher beschrieben. Es zeigt:
- Figur 1: ein Blockschaltbild einer Schaltungsanordnung zur Durchführung erfindungsgemäßer Verfahren;
- Figur 2: als Ausführungsbeispiel eines Filters einer Schaltungsanordnung zur Durchführung eines erfindungsgemäßen Verfahrens die nichtregressive Struktur eines Digitalfilters mit Tiefpaßverhalten;
- Figur 3: als Ausführungsbeispiel eines Filters einer Schaltungsanordnung zur Durchführung eines erfindungsgemäßen Verfahrens die nichtrekursive Struktur eines Digitalfilters mit Bandpaßverhalten,
- Figur 4: ein Blockschaltbild einer Schaltungsanordnung zur Datenabtrennung, bestehend aus zwei umschaltbaren Filtersätzen.

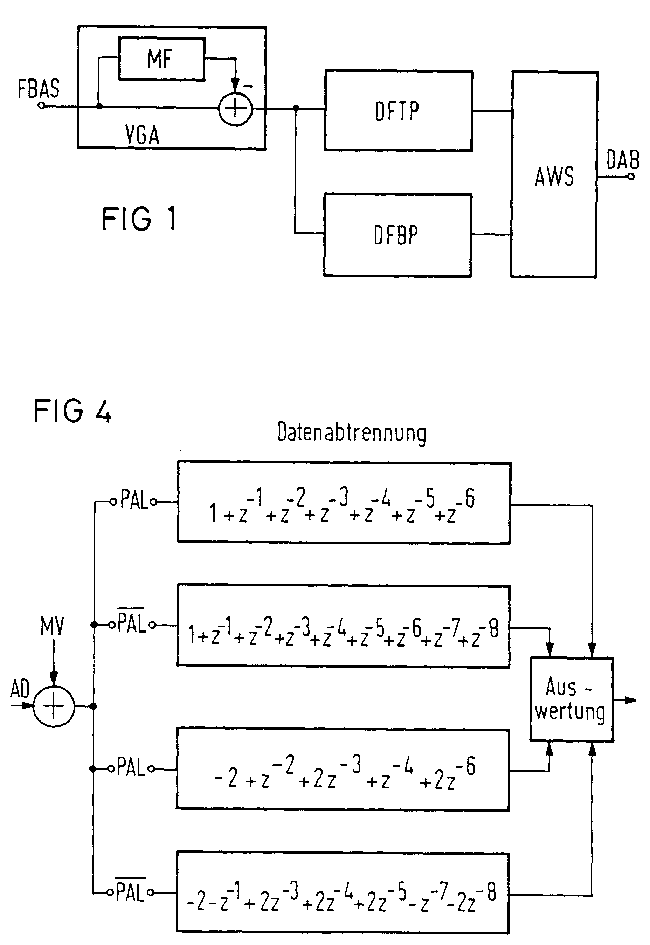

Figur 1 zeigt eine Schaltungsanordnung zum Gewinnen der binären Dateninformation aus einem an einer Eingangsklemme FBAS eingespeisten Videosignal. Gezeigt ist eine erfindungsgemäß nicht unbedingt erforderliche Vorrichtung zur Extraktion des Gleichanteiles des an der Eingangsklemme FBAS eingespeisten Videosignales, das im speziellen Fall aus einem Mittelwertfilter MF besteht, dessen Eingang mit der Eingangsklemme FBAS zusammengeschaltet ist und dessen Ausgang an den Minuent-Eingang eines Subtraktionspunktes geschaltet ist, der das Ausgangssignal dieses Mittelwertfilters von dem an der Eingangsklemme FBAS eingespeisten Eingangssignales abzieht. Der Ausgang dieser Vorrichtung VGA zur Extraktion des Gleichanteiles ist sowohl an den Eingang eines digitalen Filters DFTP mit Tiefpaßverhalten als auch an den Eingang eines digitalen Filters DFBP mit Bandpaßverhalten geschaltet. Die Ausgänge der beiden digitalen Filter DFTP und DFBP sind an jeweils einen Eingang einer Auswerteschaltung AWS geschaltet. Die Auswerteschaltung AWS stellt an ihrem Ausgang DAB die binäre Dateninformation des am Eingang FBAS eingespeisten Videosignales bereit. Die Auswerteschaltung AWS kann beispielsweise die Ausgangssignale der beiden Digitalfilter DFTP und DFBP vergleichen. Die Auswerteschaltung liefert ein einer binären Null entsprechendes Signal, falls das Ausgangssignal der beiden Digitalfilter DFTP und DFBP mit dem größeren Betrag ein negatives Vorzeichen hat. Bei positivem Vorzeichen dieses betragsgrößeren Ausgangssignales der beiden Digitalfilter DFTP und DFBP liefert die Auswerteschaltung ein einer binären Eins entsprechendes Signal. Diese Schaltungsanordnung kann in einer Daten-Slicer-Anordnung, die eine weitere Schaltungsanordnung zur Taktabtrennung aufweist, verwendet werden.

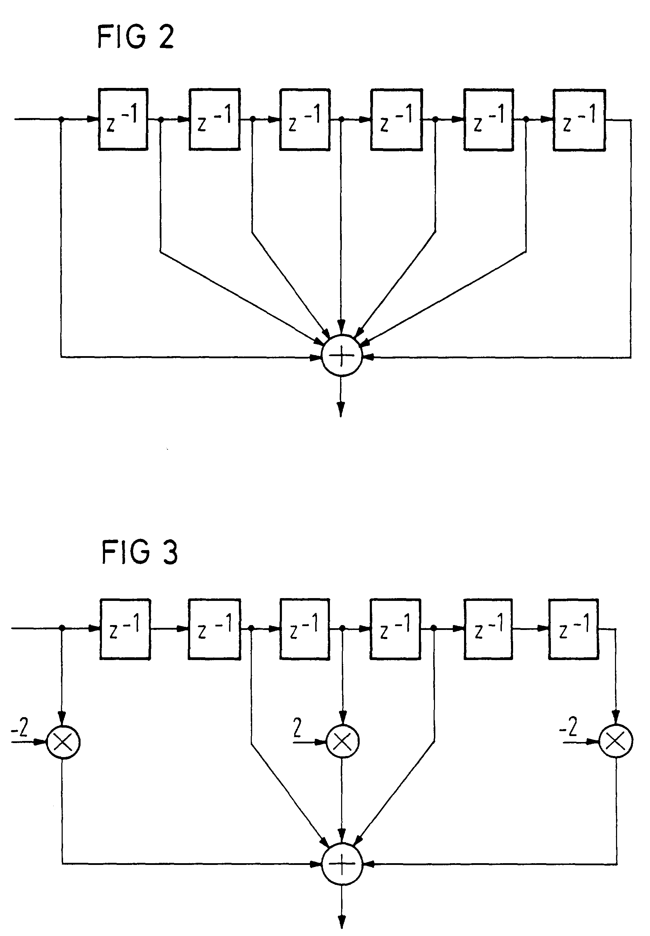

Figur 2 zeigt als Tiefpaß eine Kettenschaltung aus n Verzögerungselementen, deren Ausgänge auf einen gemeinsamen Addierer geschaltet sind. Ein solcher Tiefpaß neigt nicht leicht zu Schwingungen und ist einfach realisierbar. n ist die Anzahl der in Reihe geschalteten Verzögerungselemente, wobei im gezeigten Ausführungsbeispiel n=6 gilt.

Figur 3 zeigt in gleicher Darstellung wie Figur 2 eine mögliche Ausführungsform eines Digitalfilters mit Bandpaßcharakteristik, wie es zur Verwendung in einer Schaltungsanordnung nach Figur 1 vorgesehen sein kann.

Figur 4 zeigt eine Schaltungsanordnung zur Datenabtrennung, bestehend aus zwei umschaltbaren Filtersätzen, die jeweils einen Filter mit Tiefpaßverhalten und einen Filter mit Bandpaßverhalten umfassen. Mit AD ist das digitalisierte FBAS-Signal und mit MV das Signal für den Schwarzwert und den Ausgang eines Sync-Tiefpasses aus einer Horizontal-PLL bezeichnet. Das gezeigte Ausführungsbeispiel ist speziell für die wahlweise Datenabtrennung eines 525-Zeilen-WST-Signales und eines 625-Zeilen-WST-Signales vorgesehen. Die Abkürzung WST bedeutet "World System Teletext". Dies ist ein Teletextstandard. Für ein 625-Zeilen-WST-Signal lautet die Übertragungsfunktion des Tiefpasses 1+Z⁻¹+Z⁻+Z⁻³+Z⁻⁴+Z⁻⁵+Z⁻⁶. Die Übertragungsfunktion des entsprechenden Bandpasses lautet -2+Z⁻+2Z⁻³+Z⁻⁴-2Z⁻⁶. Die Übertragungsfunktion für das wahlweise auswertbare 525-Zeilen- WST-Signal lautet 1+Z¹+Z⁻+Z⁻³+Z⁻⁴+Z⁻⁵+ Z⁻⁶+Z⁻⁷+Z⁻⁸. Die Übertragungsfunktion des zugehörigen Filters mit Bandpaßverhalten lautet -2-Z⁻¹+2Z⁻³+2Z⁻⁴+ 2Z⁻⁵-Z⁻⁷-2Z⁻⁸.

## Patentansprüche

1. Verfahren zur Gewinnung der in einem Video-Basisband-Signal (FBAS) enthaltenen Dateninformation, bei dem das Videosignal mittels eines Filters mit Tiefpaßverhalten (DFTP) gefiltert wird,
**gekennzeichnet durch**
folgende Verfahrensschritte:
a) das Videosignal (FBAS) ist digitalisiert und wird mittels des genannten Filters mit Tiefpaßverhalten (DFTP) gefiltert, wobei dieses Filter digital ist;
b) das digitalisierte Videosignal (FBAS) wird mittels eines digitalen Filters mit Bandpaßverhalten (DFBP) gefiltert;
c) das tiefpaßgefilterte Videosignal wird mit dem bandpaßgefilterten Videosignal in Bezug auf den Betrag des jeweiligen Signalwertes verglichen und die Auswertung dieses Vergleichsergebnisses liefert die gewünschte Binärdateninformation (DAB).

2. Verfahren nach Anspruch 1,
**dadurch gekennzeichnet,**
daß der Gleichanteil des Videosignals (FBAS) vor jeder Filterung extrahiert wird.

3. Verfahren nach Anspruch 2,
**dadurch gekennzeichnet,**
daß zur Extraktion des Gleichanteiles der Mittelwert des Videosignales ermittelt wird und dieser Mittelwert vom Videosignal (FBAS) subtrahiert wird.

4. Schaltungsanordnung zur Durchführung eines Verfahrens zur Gewinnung der in einem Video-Basisband-Signal enthaltenen Dateninformation nach einem der Ansprüche 1 bis 3,
mit einem Filter mit Tiefpaßverhalten (DFTP), dem das Videosignal (FBAS) zuführbar ist,
**dadurch gekennzeichnet,**
daß die Schaltungsanordnung mindestens das Filter mit Tiefpaßverhalten (DFTP) und mindestens ein digitales Filter mit Bandpaßverhalten (DFBP) und eine Auswerteschaltung (AWS) enthält, wobei das Filter mit Tiefpaßverhalten (DFTP) digital ist, daß der Eingang des digitalen Filters mit Tiefpaßverhalten (DFTP) und der Eingang des digitalen Filters mit Bandpaßverhalten (DFBP) zusammengeschaltet sind, daß diesen verbundenen Eingängen das Videosignal digitalisiert zuführbar ist, daß der Ausgang des digitalen Filters mit Tiefpaßverhalten (DFTP) an einen Eingang der Auswerteschaltung (AWS) geschaltet ist, der Ausgang des digitalen Filters mit Bandpaßverhalten (DFBP) an einen weiteren Eingang der Auswerteschaltung (AWS) geschaltet ist, die das tiefpaßgefilterte Videosignal mit dem bandpaßgefilterten Videosignal in Bezug auf den Betrag des jeweiligen Signalwertes vergleicht, und die Auswerteschaltung (AWS) einen Signalausgang (DAB) für die Binärdateninformation hat.

5. Schaltungsanordnung nach Anspruch 4,
**dadurch gekennzeichnet,**
daß als digitales Filter mit Tiefpaßverhalten (DFTB) eine Kettenschaltung aus n Verzögerungselementen (Z⁻¹) vorgesehen ist, deren Ausgänge auf einen gemeinsamen Addierer geschaltet sind.

6. Schaltungsanordnung nach einem der Ansprüche 4 oder 5,
**dadurch gekennzeichnet,**
daß das digitale Filter mit Bandpaßverhalten (DFBP) die Übertragungsfunktion -2+Z⁻+2Z⁻³+Z⁻⁴-2Z⁻⁶ hat.

7. Schaltungsanordnung nach einem der Ansprüche 4 oder 5,
**dadurch gekennzeichnet,**
daß das digitale Filter mit Bandpaßverhalten (DFBP) die Übertragungsfunktion -2-Z⁻¹+2Z⁻³+2Z⁻⁴+2Z⁻⁵-Z⁻⁷-2Z⁻⁸ hat.

8. Schaltungsanordnung nach einem der Ansprüche 4 bis 7,
**gekennzeichnet durch**
mindestens zwei umschaltbare Filtersätze, bestehend aus jeweils einem Filter mit Tiefpaßverhalten (DFTP) und einem Filter mit Bandpaßverhalten (DFBP).

9. Schaltungsanordnung nach Anspruch 8 mit genau zwei umschaltenbaren Filtersätzen,
**dadurch gekennzeichnet,**
daß das zu dem ersten Filtersatz gehörende digitale Filter mit Tiefpaßverhalten (DFTP) die Übertragungsfunktion 1+Z⁻¹+Z⁻+Z⁻³+Z⁻⁴+Z⁻⁵+Z⁻⁶ hat, daß das zu diesem ersten Filtersatz gehörende digitale Filter mit Bandpaßverhalten (DFBP) die Übertragungsfunktion -2+Z⁻+2Z⁻³+Z⁻⁴-2Z⁻⁶ hat, daß das zu dem zweiten Filtersatz gehörende digitale Filter mit Tiefpaßverhalten (DFTP) die Übertragungsfunktion 1+Z⁻¹+Z⁻+Z⁻³+Z⁻⁴+Z⁻⁵+Z⁻⁶+Z⁻⁷+Z⁻⁸ hat und daß das zu dem zweiten Filtersatz gehörende digitale Filter mit Bandpaßverhalten (DFBP) die Übertragungsfunktion -2-Z⁻¹+2Z⁻³+2Z⁻⁴+2Z⁻⁵-Z⁻⁷-2Z⁻⁸ hat.

10. Verwendung einer Schaltungsanordnung nach einem der Ansprüche 4 bis 9 in einer Daten-Slicer-Schaltungsanordnung mit einer weiteren Schaltungsanordnung zur Taktabtrennung.

## Claims

1. Method of extracting the data information contained in a baseband video signal (FBAS), in which the video signal is filtered by means of a filter with low-pass characteristics (DFTP), characterized by the following process steps:
a) the video signal (FBAS) is digitized and is filtered by means of the said filter with low-pass characteristics (DFTP), this filter being digital;
b) the digitized video signal (FBAS) is filtered by means of a digital filter with bandpass characteristics (DFBP);
c) the low-pass-filtered video signal is compared with the bandpass-filtered video signal with respect to the amount of the respective signal value, and the evaluation of this comparison result supplies the desired binary data information (DAB).

2. Method according to Claim 1, characterized in that the d.c. component of the video signal (FBAS) is extracted before each filtering.

3. Method according to Claim 2, characterized in that, for the extraction of the d.c. component, the average value of the video signal is determined and this average value is subtracted from the video signal (FBAS).

4. Circuit arrangement for carrying out a method of extracting the data information contained in a baseband video signal according to one of Claims 1 to 3, having a filter with low-pass characteristics (DFTP), to which the video signal (FBAS) can be fed, characterized in that the circuit arrangement includes at least the filter with low-pass characteristics (DFTP) and at least one digital filter with bandpass characteristics (DFBP) and an evaluation circuit (AWS), the filter with low-pass characteristics (DFTP) being digital, in that the input of the digital filter with low-pass characteristics (DFTP) and the input of the digital filter with bandpass characteristics (DFBP) are interconnected, in that the video signal can be fed in digitized form to these connected inputs, in that the output of the digital filter with low-pass characteristics (DFTP) is connected to an input of the evaluation circuit (AWS), the output of the digital filter with bandpass characteristics (DFBP) is connected to a further input of the evaluation circuit (AWS), which compares the low-pass-filtered video signal with the bandpass-filtered video signal with respect to the amount of the respective signal value, and the evaluation circuit (AWS) has a signal output (DAB) for the binary data information.

5. Circuit arrangement according to Claim 4, characterized in that a chain network comprising n delay elements (Z⁻¹), the outputs of which are connected to a common adder, is provided as the digital filter with low-pass characteristics (DFTB).

6. Circuit arrangement according to either of Claims 4 and 5, characterized in that the digital filter with bandpass characteristics (DFBP) has the transfer function -2+Z⁻+2Z⁻³+Z⁻⁴-2Z⁻⁶.

7. Circuit arrangement according to either of Claims 4 and 5, characterized in that the digital filter with bandpass characteristics (DFBP) has the transfer function -2-Z⁻¹+2Z⁻³+2Z⁻⁴+2Z⁻⁵+Z⁻⁷-2Z⁻⁸.

8. Circuit arrangement according to one of Claims 4 to 7, characterized by at least two switchable filter sets, comprising in each case a filter with low-pass characteristics (DFTP) and a filter with bandpass characteristics (DFBP).

9. Circuit arrangement according to Claim 8, having precisely two switchable filter sets, characterized in that the digital filter with low-pass characteristics (DFTP) belonging to the first filter set has the transfer function 1+Z⁻¹+Z⁻+Z⁻³+Z⁻⁴+Z⁻⁵+Z⁻⁶, in that the digital filter with bandpass characteristics (DFBP) belonging to this first filter set has the transfer function -2+Z⁻+2Z⁻ ³+Z⁻⁴-2Z⁻⁶, in that the digital filter with low-pass characteristics (DFTP) belonging to the second filter set has the transfer function 1+Z⁻¹+Z⁻+Z⁻³+Z⁻⁴+Z⁻⁵+Z⁻⁶+Z⁻⁷+Z⁻⁸ and in that the digital filter with bandpass characteristics (DFBP) belonging to the second filter set has the transfer function -2-Z⁻¹+2Z⁻³+2Z⁻⁴+2Z⁻⁵+Z⁻⁷+2Z⁻⁸.

10. Use of a circuit arrangement according to one of Claims 4 to 9 in a data-slicer circuit arrangement having a further circuit arrangement for clock isolation.

## Revendications

1. Procédé pour récupérer l'information de données qui est contenue dans un signal de bande de base vidéo (FBAS), selon lequel le signal vidéo est filtré au moyen d'un filtre à comportement passe-bas (DFTP),
caractérisé par les étapes opératoires suivantes :
a) le signal vidéo (FBAS) est numérisé et est filtré au moyen dudit filtre à comportement passe-bas (DFTP), ce filtre étant un filtre numérique;
b) le signal vidéo numérisé (FBAS) est filtré au moyen d'un filtre numérique à comportement passe-bande (DFBP);
c) le signal vidéo ayant subi le filtrage passe-bas est comparé au signal vidéo ayant subi le filtrage passe-bande, en ce qui concerne la valeur absolue de la valeur respective du signal et l'évaluation de ce résultat de comparaison fournit la formation désirée de données binaires (DAB).

2. Procédé selon la revendication 1, caractérisé par le fait que la composante continue du signal vidéo (FBAS) est extraite avant chaque filtrage.

3. Procédé selon la revendication 2, caractérisé par le fait que la valeur moyenne du signal vidéo est déterminée pour l'extraction de la composante continue et que cette valeur moyenne est soustraite du signal vidéo (FBAS).

4. Montage pour la mise en oeuvre d'un procédé pour récupérer l'information de données contenue dans le signal de bande de base vidéo suivant l'une des revendications 1 à 3, comportant un filtre à comportement de filtre passe-bas (DFTP), auquel peut être envoyé le signal vidéo (FBAS),
caractérisé par le fait
que le montage possède au moins le filtre à comportement passe-bas (DFTP) et au moins un filtre numérique à comportement passe-bande (DFBP), et un circuit d'évaluation (AWS), le filtre à comportement passe-bas (DFTP) étant numérique, que l'entrée du filtre numérique à comportement passe-bas (DFTP) et l'entrée du filtre numérique à comportement passe-bande (DFBP) sont interconnectés, que le signal vidéo peut être envoyé sous forme numérisée à ces entrées connectées, que la sortie du filtre numérique à comportement passe-bas (DFTP) est connectée à une entrée du circuit d'évaluation (AWS), que la sortie du filtre numérique à comportement passe-bande (DFBP) est raccordée à une autre entrée du circuit d'évaluation (AWS) qui compare le signal vidéo ayant subi le filtrage passe-bas au signal vidéo ayant subi le filtrage passe-bande, en rapport avec la valeur absolue de la valeur respective du signal, et que le circuit d'évaluation (AWS) possède une sortie de signaux (DAB) pour l'information de données binaires.

5. Montage suivant la revendication 4, caractérisé par le fait qu'il est prévu, comme filtre numérique à comportement passe-bas (DFTP), un circuit itératif formé de n éléments de retardement (Z⁻¹), dont les sorties sont connectées à un additionneur commun.

6. Montage suivant l'une des revendications 4 ou 5, caractérisé par le fait que le filtre numérique à comportement passe-bande (DFBP) possède la fonction de transfert -2+Z⁻+2Z⁻³+Z⁻⁴-2Z⁻⁶.

7. Montage suivant l'une des revendications 4 ou 5, caractérisé par le fait que le filtre numérique à comportement passe-bande (DFBP) possède la fonction de transfert -2-Z⁻¹+2Z⁻³+2Z⁻⁴+2Z⁻⁵-Z⁻⁷-2Z⁻⁸.

8. Montage suivant l'une des revendications 4 à 7, caractérisé par au moins deux ensembles commutables de filtres, constitués par respectivement un filtre à comportement passe-bas (DFTP) et un filtre à comportement passe-bande (DFBP).

9. Montage suivant la revendication 8 comportant précisément deux ensembles commutables de filtres, caractérisé par le fait que le filtre numérique, qui est associé au premier ensemble de filtre et possède le comportement passe-bas (DFTP) possède la fonction de transfert 1+Z⁻¹+Z⁻+Z⁻³+Z⁻⁴+Z⁻⁵+Z⁻⁶, que le filtre numérique associé à ce premier ensemble de filtre et possédant le comportement passe-bande (DFBP) possède la fonction de transfert -2+Z⁻+2Z⁻³+Z⁻⁴-2Z⁻⁶, que le filtre numérique associé au second ensemble de filtres et possédant le comportement passe-bas (DFTP) possède la fonction de transfert 1+Z⁻¹+Z⁻+Z⁻³+Z⁻⁴+Z⁻⁵+Z⁻⁶+Z⁻⁷+Z⁻⁸ et que le filtre numérique associé au second ensemble de filtre et possédant un comportement passe-bas (DFBP) possède la fonction de transfert -2-Z⁻¹+2Z⁻³+2Z⁻⁴+2Z⁻⁵-Z⁻⁷-2Z⁻⁸.

10. Utilisation d'un montage suivant l'une des revendications 4 à 9 dans un montage de découpage de données comprenant un autre montage pour la séparation de la cadence.
